(19) Europäisches Patentamt
European Patent Office
Office européen des brevets

(11) Veröffentlichungsnummer: **0 582 220 A2**

# (12) EUROPÄISCHE PATENTANMELDUNG

(21) Anmeldenummer: **93112157.8**

(51) Int. Cl.5: **C08G 73/16**

(22) Anmeldetag: **29.07.93**

(30) Priorität: **05.08.92 DE 4225865**

(43) Veröffentlichungstag der Anmeldung:
**09.02.94 Patentblatt 94/06**

(84) Benannte Vertragsstaaten:
**AT BE CH DE ES FR GB IT LI NL**

(71) Anmelder: **HOECHST AKTIENGESELLSCHAFT**

**D-65926 Frankfurt(DE)**

(72) Erfinder: **Land, Horst-Tore, Dr.**
**Engelsruhe 18**
**D-65929 Frankfurt am Main(DE)**
Erfinder: **Gedan, Michaela, Dipl.-Ing.**
**Hauptstrasse 124a**
**D-02689 Sohland/Spr.(DE)**
Erfinder: **Rätzsch, Manfred, Prof. Dr.**
**Patrice-Lumumba-Strasse 4**
**D-01217 Dresden(DE)**
Erfinder: **Böhme, Frank, Dr.**
**Münchner Strasse 30**
**D-01187 Dresden(DE)**

## (54) Amorphe, thermoplastisch verarbeitbare Polyesterimide.

(57) Die Erfindung betrifft amorphe Polyesterimide, die dadurch gekennzeichnet sind, daß sie aus den wiederkehrenden Einheiten der Formeln I und/oder II bestehen,

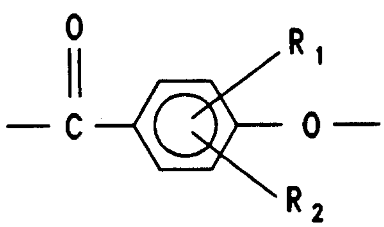

Formel I

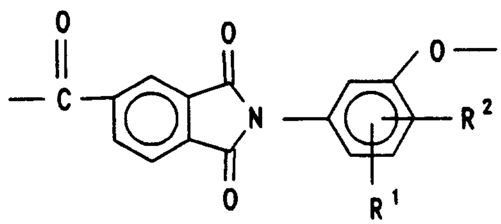

Formel II

worin

$R_1$ und $R_2$ unabhängig voneinander H, verzweigte oder unverzweigte Alkylreste mit 1 bis 6 C-Atomen, verzweigte oder unverzweigte Alkoxyreste mit 1 bis 6 C-Atomen oder Fl, Cl oder Br sein können und die Einheiten der Formel II in einer Menge von 50 bis 100 Mol%, bezogen auf die Gesamtmenge der Einheiten, enthalten sind.

Die erfindungsgemäßen Polyesterimide sind für die Herstellung von Formmassen, Formkörpern, Fasern und Folien geeignet.

EP 0 582 220 A2

Die Erfindung betrifft amorphe, thermoplastisch verarbeitbare Polyesterimide auf der Basis von N-(3-Hydroxyphenyl)-trimellitsäureimid, ein Verfahren zu ihrer Herstellung und ihre Verwendung zur Herstellung von Formteilen, Fasern, Folien und Beschichtungsmaterialien und von verstärkten oder gefüllten Formmassen.

Unter amorphen Hochleistungspolymeren versteht man polymere Gläser, die eine Glastemperatur von über 150 °C aufweisen. Diese Materialien haben insbesondere wegen ihrer Transparenz und wegen ihrer ausgezeichneten mechanischen Eigenschaften in Kombination mit ihrer guten Verarbeitbarkeit und ihrer hohen Wärmeformbeständigkeit eine breite Anwendung bei der Herstellung von Formteilen, Folien und Fasern gefunden. So werden beispielsweise Isolierplatten, Kontrolltasten, Sichtscheiben, Lampenabdeckungen, Schnappverbindungen, Formteile für Mikrowellenherde, Scheinwerferreflektoren, sterilisierbare Medizingeräte und Formteile für Elektrowerkzeuge aus amorphen Hochleistungspolymeren hergestellt.

Bisher wurden als amorphe Hochleistungspolymere vorwiegend Polyarylate, Polyestercarbonate, Polyethersulfone, Polysulfone und Polyetherimide sowie modifizierte Polycarbonate verwendet (D. Freitag, G. Fengler, L. Morbitzer; Angew. Chem., 103, 1626 (1991)).

Der Einsatz von Polyesterimiden in Form von amorphen Hochleistungspolymeren hat bis heute wenig Beachtung gefunden, da keine geeignete Zusammensetzung für diese Materialien ermittelt werden konnte, die zu einem Polymeren mit einer Glastemperatur von über 200 °C führt, das noch bei Temperaturen bis 380 °C thermoplastisch verarbeitbar ist und auch als Formkörper die vorteilhaften Eigenschaften wie Transparenz und gute Schlagzähigkeit besitzt.

Polyesterimide sind zwar bereits als flüssigkristalline Polymere untersucht worden. So werden in DE 3 814 974 A1 thermotrope Polyesterimide beansprucht, die neben Einheiten von N-(3-Hydroxyphenyl)-trimellitsäureimid und p-Hydroxybenzoesäure zusätzlich aromatische Dihydroxy- und Dicarbonsäure-Einheiten enthalten. Der flüssigkristalline Charakter dieser Polymeren führt jedoch zu einer Anisotropie der Materialeigenschaften, was im Einsatzfeld der amorphen Hochleistungspolymeren unerwünscht ist. Als nachteilhaft erweisen sich hier ebenso die für flüssigkristalline Polymeren typischen Eigenschaften wie z.B. eine unzureichende Reißdehnung und ihre mangelnde Transparenz (H. Domininghaus; "Die Kunststoffe und ihre Eigenschaften", S.537, VDI-Verlag Düsseldorf (1988)).

Die Aufgabe der Erfindung bestand darin, amorphe, thermoplastisch verarbeitbare Polyesterimide bereitzustellen. Insbesondere sollten diese bei Temperaturen bis 380 °C thermoplastisch verarbeitet werden können und ihre Glastemperatur sollte größer als 200 °C sein. Auch als Formkörper sollten sie gute mechanische und optische Eigenschaften besitzen.

Diese Aufgabe wird erfindungsgemäß gelöst durch amorphe Polyesterimide, die aus den wiederkehrenden Einheiten I und II bestehen:

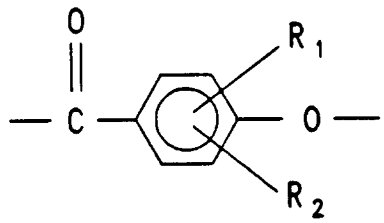

Einheit I

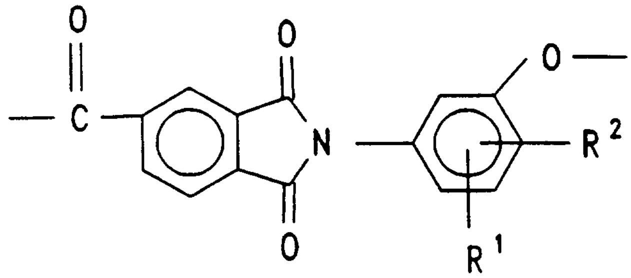

Einheit II

wobei Einheit I von p-Hydroxybenzoesäure und Einheit II von N-(3-Hydroxyphenyl)-trimellitsäureimid abgeleitet ist, und worin $R_1$ und $R_2$ unabhängig voneinander H, verzweigte oder unverzweigte Alkylreste mit 1 bis 6 C-Atomen, verzweigte oder unverzweigte Alkoxyreste mit 1 bis 6 C-Atomen oder F, Cl oder Br sein können und die Einheiten der Formel II in einer Menge von mindestens 50 Mol-%, bezogen auf die

Gesamtmenge der Einheiten, enthalten sind.

Wesentliches Merkmal der erfindungsgemäßen Polyesterimide ist der hohe Anteil der N-(3-Hydroxyphenyl)-trimellitsäureimid-Einheit II an der Gesamtzusammensetzung. Er ist bevorzugt mindestens 50 Mol% und kann bis zu 100 Mol% betragen, insbesondere liegt der Anteil bei 60 bis 100 Mol%.

Die Wiederholungseinheiten I und II können in statistischer Verteilung oder in Blökken enthalten sein.

Die erfindungsgemäßen Polyesterimide können durch verschiedene Verfahren hergestellt werden, z. B. durch Kondensation bzw. Umesterung der von den Einheiten I und II abgeleiteten Hydroxycarbonsäuren oder ihrer reaktionsfähigen Derivate und anschließender Polykondensation (Y. Imai, M. A. Kakimoto; "Synthesis and Characterization of Aromatic Polyesters" in "Handbook of Polymer Science and Technology", S. 177 ff., Marcel Dekker Inc.; New York (1989)).

Einheit I ist erhältlich aus p-Hydroxybenzoesäure oder aus deren reaktiven Derivaten, wie den Aryl- oder Acylestern. Als bevorzugte reaktive Derivate seien die Phenylester, die Tolylester und die Propionate genannt. Besonders bevorzugt sind die Acetate. Die Herstellung substituierter p-Hydroxybenzoesäurederivate ist u.a. beschrieben in R. Stern, Dissertation, Universität Mainz 1988.

Einheit II wird hergestellt aus N-(3-Hydroxyphenyl)-trimellitsäureimid oder aus deren reaktiven Derivaten, wie den Aryl- oder Acylestern.

Die Herstellung von N-(3-Hydroxyphenyl)-trimellitsäureimid kann nach literaturbekannten Methoden aus m-Aminophenol und Trimellitsäureanhydrid erfolgen (vgl. z.B. K. Kurita, S. Matsuda; Makromol. Chem. 194, 1223 (1983)).

Beispiele für bevorzugte Verfahren zur Synthese der erfindungsgemäßen Polyesterimide sind die Umsetzung der niederen Acylester der sich von den Einheiten I und II ableitenden Hydroxycarbonsäuren, wobei die niederen Acylester auch in situ hergestellt werden können, sowie die Umsetzung der Arylester der sich von den Formeln I und II ableitenden Hydroxycarbonsäuren. Diese Reaktionen können sowohl in Schmelze wie auch in Gegenwart eines Lösungsmittels, beispielsweise chlorierter Aromaten, durchgeführt werden. Bevorzugt ist die Synthese der Polyesterimide in einer Schmelze.

Als Endgruppen können die erfindungsgemäßen Polyesterimide -COOH, -H, -OH und/oder Acyloxy - Reste enthalten. Die Endgruppen können auch von monofunktionellen Molekulargewichtsreglern gebildet werden. Bevorzugte Molekulargewichtsregler sind 4-Hydroxybiphenyl, 2-Hydroxynaphthalin, tert-Butylphenol oder aromatische Monocarbonsäuren wie Benzoesäure oder 4-Biphenylcarbonsäure. Diese Molekulargewichtsregler werden vorzugsweise in Mengen von 0,01 bis 5 Mol-%, bezogen auf die Gesamtmenge der Monomeren, eingesetzt.

Die Kondensations- und Umesterungsreaktionen können ebenso wie die Polymerisationsreaktion durch Einsatz geeigneter Katalysatoren beschleunigt werden. Derartige Katalysatoren sind Lewissäuren wie beispielsweise Magnesium, Titantetraisopropylat, Magnesiumacetat, Kaliumacetat, Cobaltacetat, Alkoxytitanate, Dibutylzinndilaurat oder Germaniumdioxid. Die Katalysatoren werden bevorzugt in Mengen von 0,001 bis 2 %, bezogen auf die Gesamtmasse der Ausgangsverbindungen, eingesetzt.

Es ist möglich, die Herstellung der erfindungsgemäßen Polyesterimide bei Temperaturen zwischen 180 und 350 °C durchzuführen.

In der Regel ist es vorteilhaft, die Polymerisationsreaktion durch das Anlegen von Vakuum zu beschleunigen. Der eingesetzte Unterdruck kann bei Temperaturen oberhalb 220 °C angelegt werden. Er beträgt meist 100 bis 10 000 Pa.

Die erfindungsgemäßen Polyesterimide sind amorphe Polymere, die eine Glastemperatur von über 150 °C, vorzugsweise über 200 °C aufweisen. Als polymere Gläser zeichnen sie sich durch eine hohe Transparenz und durch gute mechanische Eigenschaften, wie beispielsweise hohe Schlagzähigkeit und hohe Reißdehnung, aus. Wegen der überraschend niedrigen Schmelzviskosität der erfindungsgemäßen Polyesterimide bei 350 °C von kleiner 2 000 Pa•s, bevorzugt kleiner 1 000 Pa•s, können diese amorphen Polymeren besonders günstig aus der Schmelze zu Formteilen, Fasern und Folien verarbeitet werden. Da die erfindungsgemäßen Polyesterimide kein flüssigkristallines Verhalten zeigen, sind die Werkstoffeigenschaften der spritzgegossenen Formteile nicht anisotrop.

Die erfindungsgemäßen Polyesterimide können auch - sowohl pulverförmig wie auch in einem Lösungsmittel dispergiert - als Überzugs- oder Beschichtungsmaterial verwendet werden. Auch zur Herstellung verstärkter und/oder gefüllter Formmassen mit einem Gehalt an Verstärker oder Füllstoff von 3 bis 65 %, bezogen auf das Gesamtgewicht der verstärkten und/oder gefüllten Formmasse, sind sie sehr gut geeignet. Als Füllstoffe kommen beispielsweise Ruß, Kalciumcarbonat, Kreide, Quarzpulver, Glasfasern und -kugeln, Talkum, Glimmer, Kaolin, Wollastonit, Holzmehl, Schwermetallpulver oder Bariumferrit in Frage.

Die Erfindung wird durch die folgenden Beispiele näher erläutert.

Beispiele

Die Bestimmung der Glastemperaturen $T_g$ der Polymeren erfolgte mit einem Differentialkalorimeter DSC-7 der Firma Perkin Elmer (Überlingen, Bundesrepublik Deutschland), wobei die Aufheizrate 10 ° C/min betrug.

Die inhärente Viskosität $\eta_{inh}$ stellt ein Maß für die mittlere Kettenlänge der entstandenen Polymere dar. Unter $\eta_{inh}$ wird der Ausdruck

$$\lim_{C2 \to 0} \frac{\eta_{sp}}{C_2}$$

verstanden, wobei
$C_2$ = Konzentration des gelösten Stoffes

$$\eta_{sp} = \frac{\eta}{\eta_1} - 1$$

$\eta_{sp}$ = spezifische Viskosität
$\eta$ = Viskosität der Lösung
$\eta_1$ = Viskosität des reinen Lösemittels
ist. Die inhärenten Viskositäten wurden mittels eines Ubbelohde-Viskosimeters in p-Chlorphenol bei 45 ° C bei einer Konzentration von 0,5 g Polymer in 100 ml Lösungsmittel bestimmt.

Die Schmelzviskosität ist ein Maß für die innere Reibung in der Schmelze. Sie wurde mit einem Rheometer RDS-300 (Fa. Rheometrics, Frankfurt, Bundesrepublik Deutschland) bei einer Schergeschwindigkeit von 1000 rad/s und bei 350 ° C gemessen.

Die Verarbeitung der hergestellten Polyesterimide durch Spritzguß erfolgte mit einem Extruder ((R)Rheocord System 90/Rheomex 600, Fa. Haake, Karlsruhe, Bundesrepublik Deutschland) unter Schutzgas. Als Schutzgas wurde Argon eingesetzt.

Die mittels Spritzguß erhaltenen Normzugstäbe wurden auf ihre mechanischen Eigenschaften hin überprüft.

Mit Hilfe einer Zugprüfmaschine (R)Instron 4302 (Fa. Instron, Offenbach, Bundesrepublik Deutschland) wurden die Reißfestigkeit, d.h. die Zugspannung, bei der der Normzugstab reißt, und die Reißdehnung, d.h. die maximale Dehnung, nach DIN 53 371 bestimmt. Der Zugmodul berechnet sich nach DIN 53 457 aus der Anfangssteigung der Zug-Dehnungs-Kurve.

Die Kerbschlagzähigkeit ist ein Maß für den Widerstand eines eingekerbten Normstabes gegen einen Bruch bei einem Schlag oder Aufprall. Beim Charpy-Test wird nach DIN 53 453 (Hrsg. Deutsches Institut für Normung, "Kunststoffe, mechanische und thermische Eigenschaften", S. 170ff, Verlag Beuth, Berlin, Köln (1988)) ein definiert eingekerbter Normstab an beiden Enden gelagert und in der Mitte mit einem Pendel geschlagen. Die Kerbschlagzähigkeit wurde mit Hilfe eines Schlagprüfgeräts (Fa. Zwick, Nürnberg, Bundesrepublik Deutschland) bestimmt.

Beispiel 1:

Darstellung von N-(3-Hydroxyphenyl)-trimellitsäureimid

Die Reaktion wird in einem 4 l-Kolben durchgeführt, der mit einem Rückflußkühler, einem Innenthermometer, einer Gaszufuhr für eine Schutzgaseinleitung, einem Einfüllstutzen und einem Rührblatt versehen ist. Das Rührblatt wird von einem Rührer mit einer Leistung von 2 000 W angetrieben, als Schutzgas wird Stickstoff verwendet. In einem derart vorbereiteten Reaktionsgefäß werden 95,38 g m-Aminophenyl, 201,6 g Trimellitsäureanhydrid und 1 600 g 100%-ige Essigsäure miteinander gemischt und drei Stunden lang bei 80 ° C erhitzt. Anschließend wird das Reaktionsgemisch noch weitere vier Stunden am Rückfluß erhitzt. Der erkaltete Kolbeninhalt wird in 6 l eisgekühltes destilliertes Wasser gegeben. Das dabei ausfallende Produkt wird abfiltriert, mit 2 l heißem Wasser sowie 1 l Ethanol gewaschen und anschließend unter Vakuum bei

100 °C 48 Stunden lang getrocknet. Das Produkt ist eine schwach gelblich gefärbte, feinkristalline Verbindung.
(Ausbeute 198,5 g = 91 % d. Th.)

| Elementaranalyse: | | | |
|---|---|---|---|
| berechnet<br>gefunden | C : 63,61<br>C : 63,44 | H : 3,20<br>H : 3,43 | N : 4,94<br>N : 4,89 |

Darstellung von N-(3-Acetoxyphenyl)-trimellitsäureimid

95,93 g N-(3-Hydroxyphenyl)-trimellitsäureimid werden zusammen mit 38,05 g Essigsäureanhydrid, 200 ml 100%-iger Essigsäure und 0,5 ml 98%-iger Schwefelsäure in einem 1 l Kolben gemischt, der mit einem Rückflußkühler, einem Innenthermometer, einem KPG-Rührer (KPG = kerngezogenes Präzisionsglas) sowie einem Destillationsaufsatz versehen ist. Das Reaktionsgemisch wird 3 Stunden lang am Rückfluß erhitzt und anschließend wird destillativ die überschüssige Essigsäure entfernt. Der entstehende Rückstand wird in 200 ml Aceton aufgenommen, abfiltriert, mit 500 ml Wasser und 300 ml Aceton gewaschen und anschließend im Vakuum bei 80 °C getrocknet. Nach der Trocknung verbleiben 66,51 g eines gelblichen, feinkristallinen Produktes.
(Ausbeute = 78 % d. Th.)

| Elementaranalyse: | | | |
|---|---|---|---|
| berechnet<br>gefunden | C : 62,78<br>C : 62,85 | H : 3,41<br>H : 3,38 | N : 4,30<br>N : 4,19 |

Herstellung von Polyesterimiden

In einem mit einem Einfüllstutzen und einem Destillationsaufsatz versehenen 1l-Glasgefäß werden unter Inertgas (Stickstoff) 195,15 g (0,6 mol) N-(3-Acetoxyphenyl)-trimellitsäureimid mit 72,06 g (0,4 mol) p-Acetoxybenzoesäure und 0,05 g Titantetraisopropylat gemischt. Das Reaktionsgemisch wird innerhalb von 90 min auf 230 °C aufgeheizt und die entstehende Schmelze wird mittels eines Wendelrührers intensiv durchmischt. Anschließend wird die Schmelze für weitere 60 min auf 330 °C erhitzt und letztendlich bei 330 °C noch für 45 min bei 100 Pa im Vakuum belassen. Nach Abschluß der Reaktion und Abkühlen auf Raumtemperatur liegt ein glasartiges, leicht gelblich gefärbtes, transparentes Material vor, das mechanisch aus dem Kolben entfernt wurde.
Die inhärente Viskosität des Materials betrug 0,73 ($10^{-1}$ l/g) (gemessen in p-Chlorphenol bei 45 °C; c = 5 g/l). Die Glastemperatur ($T_g$) des Polymeren betrug 219 °C, die Schmelzviskosität 750 Pas (Schergeschwindigkeit 1 000 rad/s; 350 °C).

Beispiele 2 und 3:

Analog der in Beispiel 1 beschriebenen Reaktion wurden weitere Polyesterimide aus p-Acetoxybenzoesäure und N-(3-Acetoxyphenyl)-trimellitsäureimid hergestellt. Die Zusammensetzungen und Eigenschaften der Produkte sind in Tabelle 1 aufgeführt:

Tabelle 1

| Polyesterimide hergestellt aus p-Acetoxybenzoesäure (p-ABS) und N-(3-Acetoxyphenyl)-trimellitsäureimid (3-APTS) | | | | |
|---|---|---|---|---|
| Anteil p-ABS (Mol %) | Anteil 3-APTS (Mol %) | $\eta_{inh}$ ($10^{-1}$l/g) | $T_g$ (°C) | Schmelzviskosität (bei 1 000 rad/s, 350 °C in Pas) |
| 45 | 55 | 0,68 | 205 | 660 |
| 30 | 70 | 0,59 | 226 | 850 |

Beispiel 4:

Aus dem in Beispiel 1 erhaltenen Polymeren wurde durch Spritzguß bei 350 °C ein Normzugstab hergestellt und auf seine mechanischen Eigenschaften hin überprüft. Die ermittelten Werte sind in Tabelle 2 zusammengefaßt. Ergänzend ist die Glastemperatur und die inhärente Viskosität aufgeführt:

Tabelle 2

| Physikalische Eigenschaften des aus 40 Mol-% p-Acetoxybenzoesäure und 60 Mol-% n-(3-Acetoxyphenyl)-trimellisäureimid hergestellten Polyesterimides | | | | | |
|---|---|---|---|---|---|
| $\eta_{inh}$ ($10^{-1}$l/g) | Tg (°C) | Reißfestigkeit (MPa) | Reißdehnung (%) | Zugmodul (GPa) | Kerbschlagzähigkeit (nach Charpy) (kJ/$m^2$) |
| 0,73 | 219 | 81 | 35 | 2,3 | 25,1 |

**Patentansprüche**

**1.** Amorphe Polyesterimide, dadurch gekennzeichnet, daß sie aus den wiederkehrenden Einheiten der Formeln I und/oder II bestehen,

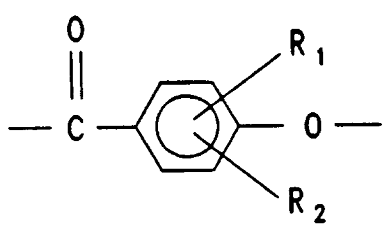

Formel I

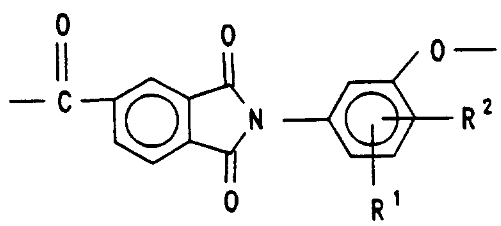

Formel II

worin

$R_1$ und $R_2$ unabhängig voneinander H, verzweigte oder unverzweigte Alkylreste mit 1 bis 6 C-Atomen, verzweigte oder unverzweigte Alkoxyreste mit 1 bis 6 C-Atomen oder F, Cl oder Br sein können und die Einheiten der Formel II in einer Menge von 50 bis 100 Mol%, bezogen auf die Gesamtmenge der Einheiten, enthalten sind.

**2.** Amorphe Polyesterimide nach Anspruch 1, dadurch gekennzeichnet, daß sie die Einheiten II in einer Menge von 60 bis 100 Mol% enthalten.

3. Amorphe Polyesterimide nach den Ansprüchen 1 oder 2, dadurch gekennzeichnet daß sie eine Glastemperatur über 150 ° C, vorzugsweise über 200 ° C, besitzen.

4. Verfahren zur Herstellung von amorphen Polyesterimiden nach den Ansprüchen 1 bis 3, dadurch gekennzeichnet, daß die von den Einheiten I und II abgeleiteten Hydroxycarbonsäuren oder ihrer reaktionsfähigen Derivate durch eine Polykondensationsreaktion verknüpft werden.

5. Verfahren zur Herstellung von amorphen Polyesterimiden nach Anspruch 4, dadurch gekennzeichnet, daß die reaktionsfähigen Ausgangsstoffe für die Polyesterimide mit den Einheiten I und II Aryl- oder Acylester sind.

6. Formmasse auf der Basis von Polyesterimiden gemäß einem der Ansprüche 1 bis 3, dadurch gekennzeichnet, daß sie zusätzlich 3 bis 65 % eines Verstärkungs- oder Füllstoffes enthält, bezogen auf das Gesamtgewicht der Formmasse.

7. Formmasse nach Anspruch 6, dadurch gekennzeichnet, daß als Verstärkungs- oder Füllstoffe Kalciumcarbonat, Quarzpulver, Glasfasern, -kugeln, Kreide, Talkum, Glimmer, Kaolin, Wollastonit, Holzmehl, Schwermetallpulver, Bariumferrit oder Ruß verwendet werden.

8. Verwendung von Formmassen nach den Ansprüchen 6 oder 7 zur Herstellung von Formkörpern, Fasern und Folien.